# EUROPEAN PATENT SPECIFICATION

(11) **EP 0 453 156 B1**
(45) Date of publication and mention of the grant of the patent: **14.12.1994**
(21) Application number: 91303124.1
(22) Date of filing: 09.04.1991
(51) Int. Cl.: B01D 46/02, B01D 39/16

(54) **Reinforced sleeve assembly**
Verstärkte Hülsenanordnung
Assemblage de manchon renforcé

(30) Priority: 17.04.1990 GB 9008559
(43) Date of publication of application: 23.10.1991
(73) Proprietor: W.L. GORE & ASSOCIATES (UK) LTD, London WC2A 2JP (GB)
(72) Inventor: Bannatyne, Craig Henry, Whitburn, West Lothian (GB); Strang, Alexander, Whitburn, West Lothian (GB)
(74) Representative: Horner, Martin Grenville

(56) References cited:
- GB-A- 1 518 477
- GB-A- 2 064 978
- US-A- 3 241 297
- US-A- 3 243 940

## Description

The present invention relates to a reinforced sleeve assembly, particularly but not exclusively for use in gas filtration.

Recent environmental legislation places increasingly severe limits on the permitted level of particulate material (such as soot, fume and dust particles) which may be emitted with gases vented to the atmosphere. A typical maximum permitted solids content is 250mg per cubic metre of air, though in some countries lower limits such as 100mg per cubic metre are prescribed. However, there is a need to be able to meet increasingly stringent emission standards.

In order to remove particles from the gas, installations such as power stations, manufacturing plants, incinerators etc. are fitted with bag filters which filter out and collect the solid material. One particular construction employs filter cloth formed into tubular vertical sleeves. Gas to be filtered is then passed through the sleeves either from the inside or the outside. Solid material collected on the filter bags may be periodically removed by mechanical shaking or by applying back pressure to the sleeves to dislodge the material, which falls and is collected up. In one particular type of filter, gas to be filtered is passed up inside the filter sleeve. When solid material builds up on the filter, it is cleaned by either applying a reverse pressure of cleaning air to the outside of the sleeve or by applying a reduced pressure to the inside of the sleeve such as to partially collapse the sleeve and cause the solid matter to become dislodged. However, it is important that the sleeve should not be allowed to collapse completely and thereby prevent airflow and removal of solids. To prevent collapse of the sleeve, rings are sewn around the outside of the filter sleeve at regular intervals along its length. Typically, such filters are 5 to 12 metres in length and have rings sewn in at approximately 1 metre intervals.

The gases to be filtered are often at relatively high temperatures e.g. 150 to 300°c and may contain corrosive gases such as sulphur oxides and nitrogen oxides. The material used to construct the filter sleeve must therefore be chosen to withstand the conditions encountered. A particularly suitable material is an expanded polytetrafluoroethylene (PTFE) material available under the Registered Trademark GORE-TEX. Expansion of the material results in a very small pore size able to filter out particles of sub-micron size. Also, PTFE is able to withstand high temperatures and corrosive gases. Usually, the PTFE filter will be supported on a woven or non-woven support material.

However, whilst the PTFE filter material itself is capable of excluding almost all particles, a limit is imposed on the efficiency of the overall filter by the fact that the supporting rings are sewn in place. The holes made by the sewing process gradually become enlarged due to the tension on the filter cloth and the pulling and cutting action of the sewing thread. This leads to relatively large holes which allow small particles to escape and also constitute points of weakness in the filter leading to mechanical failure.

Reinforced sleeve assemblies wich comprise
- a hollow sleeve formed of a non-rigid sheet material;
- a rigid interior support ring member arranged around the inside of the sleeve; and
- an exterior clamping member clamped around the outside of the sleeve are known from US-A- 3 243 940 or US-A- 3 241 297.

It is an object of the present invention to improve the securing of the supporting rings to the hollow filter sleeve.

The present invention provides a reinforced sleeve assembly of the kind mentioned just above, particularly for use in gas filtration, which is characterized in that the exterior clamping member has a cross-section which includes a channel-shaped cross-sectional position operatively embracing the interior support ring such that the members grip the sleeve and are securely located thereon.

The hollow sleeve may be formed of any woven or non-woven material suitable for the application in mind. Whilst the present invention is primarily intended for use in the filtration field, it may also find general application where a sleeve of non-rigid material is to be held open, such as in a chute. For filtration applications, the material is preferably a gas-permeable filtration membrane, such as an expanded fluorocarbon polymer especially PTFE. In order to provide structural strength, the filter membrane may be supported, for example, by lamination or direct deposition, on a woven or non-woven substrate formed for example, from glass fibre, stainless steel or a polymer (such as a fluorocarbon polymer, a polyester, a polyamide, or polypropylene) or from carbon fibre. The particular substrate material will generally be chosen depending on the temperature and corrosiveness of the gas to be filtered. Polymer substrate materials may include fillers, such as carbon for imparting antistatic properties.

The rigid interior support ring member is generally of a circular or oval shape, and is typically formed from an inert metal such as stainless steel.

The exterior clamping member is generally of the same shape as the ring member and formed of the same material to avoid stresses being set up by differential thermal expansion.

The support ring member and clamping member have inter-engagable cross-sectional configurations such that when the clamping member is clamped around the support ring they become locked together. In one embodiment, the ring is of circular cross-section and the clamping member has a channel cross-section; or vice versa. In another embodiment, both have inter-engagable channel-shaped cross-sections.

In order to increase the clamping area, a pair of circular cross-section rings may be used side-by-side; though this makes assembly a little more difficult. However, in a preferred embodiment, the interior ring has an oval cross-section (with the long axis of the oval along the line of the hollow sleeve) and the clamping member has a corresponding oval shaped channel. This oval cross-section provides a large clamping contact area and also reduces the angle through which the sleeve material is bent; both of which help to avoid damage to the sleeve material.

The exterior clamping member is generally of variable peripheral length so that it can be tightened around the support ring. Thus, the clamping member may be provided with a screw clip or band clip for tightening the clamping member. However, many suitable ways of tightening the clamping member are known in the art.

In order to prevent creases being set up in the filter sleeve, which could lead to premature failure, it is important that the member should be securely clamped in place, usually at right angles to the length of the hollow sleeve. In order to prevent chaffing of the filter material, it may be desirable to interpose sheets of polymeric material between the members and the filter sleeve.

The reinforced sleeve assembly is particularly useful for providing high performance filters, particularly when used in conjunction with expanded PTFE filter membranes and eliminates stitching holes around the support rings. Such filters may be used for removing micron sized particles from flue gas from coal-fired boilers, prior to the gas being passed to catalytic convertors for removing sulphur oxides and nitrogen oxides. Such particles would otherwise tend to deactivate the catalyst materials.

Embodiments of the present invention will now be described by way of example only with reference to the drawings wherein
Figure 1 is a cross-sectional view of part of a reinforced sleeve assembly for gas filtration;
Figure 2 is a side elevation of a bandclip for tightening the exterior clamping member; and
Figure 3 is a partial section of a further embodiment wherein the support ring is of oval cross-section.

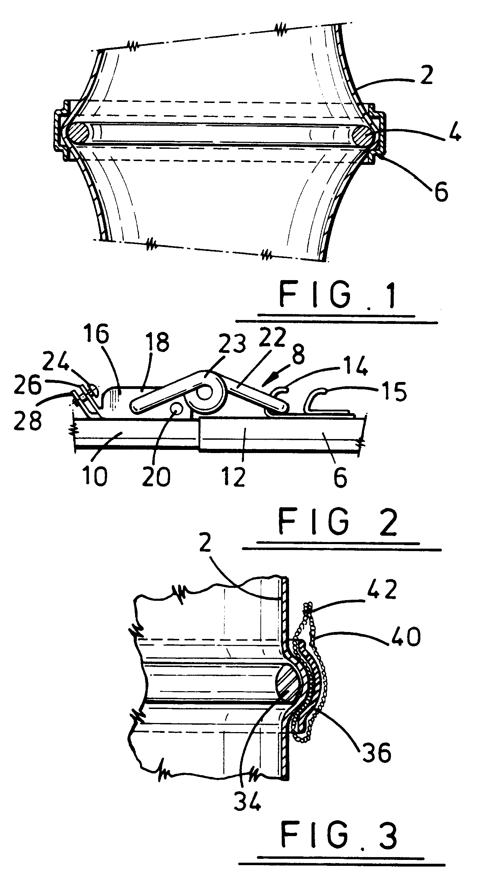

As shown in Figure 1, the assembly comprises a hollow sleeve 2 formed of a gas permeable filter fabric. A circular reinforcing support ring member 4 of circular cross-section is clamped inside the sleeve by means of an exterior clamping member 6 of channel-shaped cross-section which engages the interior support ring member, gripping the sleeve and securely locating the ring member in place.

The filter fabric from which the sleeve is formed in the present example comprises a woven glass fibre supporting fabric having laminated to the inside thereof a thin permeable membrane formed of expanded PTFE (available under the Registered Trademark GORE-TEX) which contains minute pores sufficient to remove solid particulate matter of particle size down to sub-micron levels. In contrast to other filter fabrics, the expanded PTFE membrane tends to retain solid particles at the surface thereof, which facilitates later removal of the collected solid material. Moreover, PTFE has excellent temperature and chemical resistance properties.

The interior support ring member 4 is usually formed of stainless steel and acts to hold the sleeve open, particularly during reverse airflow cleaning operations. The channel-shaped clamping member 6 is also formed of stainless steel to minimise any differential expansion effects. Alternatively, the clamping member might be formed of a metal having a slightly lower coefficient of expansion so that rise in temperature would tend to tighten the clamping member around the ring. Generally, the filter sleeve would be approximately 10 metres in length and be provided with interior support ring members clamped in place at approximately 1 metre intervals along its length.

Figure 2 shows a typical bandclip 8 for tightening the exterior clamping member 6 around the interior support ring member 4. However, many alternative ways of tightening the clamping member will be apparent to the skilled man. The clamping member 6 has two overlapping relatively slideable ends 10, 12. A pair of spaced hooks 14, 15 are provided on end 12 and attached thereto, e.g. by means of rivets. An overcentre clip mechanism 16 is attached to the other end 10. The clip comprises a body 18 pivotally attached to the end 10 at pivot point 20 via a base member. A loop 22 having a centre section 23 in the form of a spring coil is pivotally attached at one end to the body 18 and at the other end hooks over the hook 14 or 15 thereby securing together the two ends of the clamping member. The clip is secured in the locked position by means of a self tapping screw 24 which passes through a hole in extension 26 of the body and is screwed into a threaded hole in an inclined strap 28 which is formed as an extension of the baseplate.

Figure 3 shows a second embodiment wherein the support ring member 34 is of oval cross-section to maximise the clamping area for a given weight of ring. Clamping member 36 has a complementary channel section. The oval section reduces the angle of contact of the sleeve material when the sleeve is deflated during back-pressure cleaning operations, and helps minimise the chance of damage to the filter sleeve.

Interposed between the oval support ring member 34 and the clamping member 36 is a felt layer 40 formed of PTFE, which helps protect the filter sleeve from abrasion or cutting by the clamping member. The felt passes around the clamping member and the bandclip so as to enclose them, and the two edges are sewn together along a seam 42. Enclosing the clamping member and bandclip in this way helps to prevent damage to adjacent filter sleeves during installation.

The reinforced sleeve assembly may be made up as follows. The hollow sleeve of filter material is stretched out and positions for the support ring members are marked on the outside thereof. Then, the rings are inserted one at a time and a layer of cushioning felt placed around the ring on the outside of the sleeve. A clamping member is then clamped around the exterior thereof, care being taken that the rings are secured in place at right angles to the length of the hollow sleeve. To locate the clamping member, the bandclip is disconnected and the ends of the clamping member pulled apart slightly to enable the clamping member to be slipped around the support ring. The ends are then drawn together and loop 22 is hooked over hook 14. The body is pivoted downwards to reach the position shown in Figure 2. The longitudinal tension on the hollow filter sleeve is relaxed once all the rings have been clamped in place, and the sleeve adopts the relaxed position as shown in Figure 1. As the material clamped between the ring and the clamping member relaxes, the radially-outward pressure exerted by the sleeve material on the clamping member also reduces so that a degree of play may arise. This can be taken up by undoing the bandclip, tightening the loop further and hooking it over the rear hook 15. The screw 24 is then screwed (or rivetted) to strap 28 to hold the clip in its locked position.

The filter is operated as follows. Particle-laden gas is passed into the inside of the sleeve through the bottom end, the top being closed. Cleaned air passes through the sleeve, whilst the solid particles are retained on the inside of the sleeve. When the pressure drop across the filter rises to a predetermined level, the filter is cleaned by applying a partial suction to the inside of the sleeve to draw air backwards through the sleeve. This partly collapses the sleeve causing the solid particles to become dislodged and to fall down the centre of the sleeve to be collected. The interior support ring members 4 prevent total collapse of the sleeve, always leaving a central airflow space along the entire length of the filter sleeve.

## Claims

1. A reinforced sleeve assembly, particularly for use in gas filtration, which comprises:
a hollow sleeve (2) formed of a non-rigid sheet material;
a rigid interior support ring member (4, 34) arranged around the inside of the sleeve; and
an exterior clamping member (6, 36) clamped around the outside of the sleeve,
characterized in that the exterior clamping member has a cross-section which includes a channel-shaped cross-sectional portion operatively embracing the interior support ring such that the members grip the sleeve and are securely located thereon.

2. An assembly according to claim 1 wherein the sleeve material comprises a film of porous expanded polytetrafluoroethylene.

3. An assembly according to claim 2 wherein the porous expanded polytetrafluoroethylene film is laminated to a substrate material.

4. An assembly according to any preceding claim wherein the support ring member (34) is of oval cross-section.

5. An assembly according to any of claims 1 to 3 which comprises a pair of support ring members each of circular cross-section arranged side-by-side.

6. An assembly according to any preceding claim wherein the exterior clamping member is circumferentially discontinuous and is provided with clip means (8) for tightening the clamping member around the interior ring member.

7. A filter assembly which comprises a reinforced sleeve assembly according to any preceding claim, means for introducing a stream of gas to be cleaned into the interior of the sleeve assembly, and means for providing a backpressure across the sleeve assembly so as to dislodge matter filtered from the gas stream.

## Patentansprüche

1. Eine verstärkte Hülsenanordnung, insbesondere zur Verwendung bei der Gasfiltration, welche aufweist:
eine hohle Hülse (2), die aus einem nicht starren Folienmaterial geformt ist;
ein starres, inneres Träger-Ringelement (4, 34), welches um die Innenseite der Hülse herum angeordnet ist;
ein äußeres Klemmbefestigungselement (6, 36), welches um die Außenseite der Hülse herum geklemmt ist, **dadurch gekennzeichnet,** daß das äußere Klemmbefestigungselement einen Querschnitt aufweist, welcher einen kanalförmigen Querschnittsabschnitt umfaßt, der den inneren Träger-Ring in der Betriebslage in einer solchen Art und Weise umklammert, daß die Elemente die Hülse ergreifen und an dieser sicher angeordnet sind.

2. Eine Anordnung gemäß Anspruch 1, bei welcher das Hülsenmaterial eine Folie aus porösem expandiertem Polytetrafluorethylen umfaßt.

3. Eine Anordnung gemäß Anspruch 2, bei welcher die poröse expandierte Polytetrafluorethylen-Folie auf ein Substratmaterial geschichtet ist.

4. Eine Anordnung gemäß einem der vorhergehenden Ansprüche, bei welcher das Trägerring-Element (34) von einem ovalen Querschnitt ist.

5. Eine Anordnung gemäß einem der Ansprüche 1 bis 3, welche ein Paar von Seite an Seite angeordneten Trägerring-Elementen umfaßt. von denen ein jedes von kreisförmigem Querschnitt ist.

6. Eine Anordnung gemäß einem der vorhergehenden Ansprüche, bei welcher das äußere Klemmbefestigungselement über seinen Umfang diskontinuierlich ist und mit Klammer-Mitteln (8) zum dichten Anziehen des Klemmbefestigungselementes um das innere Ring-Element herum versehen ist.

7. Eine Filter-Baugruppe, welche aufweist: eine verstärkte Hülsenanordnung gemäß einem der vorhergehenden Ansprüche, Mittel zum Einleiten eines zu reinigenden Gasstromes in das Innere der Hülsenanordnung, sowie Mittel zum Erzeugen eines Rück- oder Gegen-Druckes über die Hülsenanordnung, so daß Material, welches aus dem Gasstrom heraus gefiltert ist, entfernt wird.

## Revendications

1. Ensemble constituant une manche renforcée, en particulier pour emploi en filtration des gaz, comportant:
une manche creuse (2) formée d'un matériau en feuille non rigide;
un élément annulaire support intérieur rigide (4, 34) disposé autour de l'intérieur de la manche; et
un élément de bridage extérieur (6, 36) bridé autour de l'extérieur de la manche,
caractérisé par le fait que l'élément de bridage extérieur présente une section transversale comprenant une portion de section transversale en forme de canal qui embrasse fonctionnellement l'anneau support intérieur de façon telle que les éléments saisissent la manche et s'y placent en sécurité.

2. Ensemble selon la revendication 1, dans lequel le matériau de la manche comporte un film de polytétrafluoroéthylène poreux expansé.

3. Ensemble selon la revendication 2, dans lequel le film de polytétrafluoroéthylène poreux expansé est lamifié sur un matériau substrat.

4. Ensemble selon l'une quelconque des revendications précédentes dans lequel l'élément annulaire support (34) présente une section transversale ovale.

5. Ensemble selon l'une quelconque des revendications 1 à 3, comportant une paire d'éléments annulaires supports, chacun de section transversole circulaire, disposés côte à côte.

6. Ensemble selon l'une quelconque des revendications précédentes, dans lequel l'élément de bridage extérieur est discontinu dans le sens circonférentiel et comporte des moyens formant collier (8) pour serrer l'élément de bridage autour de l'élément annulaire intérieur.

7. Ensemble de filtration comportant un ensemble constituant une manche renforcée conformément à l'une quelconque des revendications précédentes, des moyens pour introduire un flux de gaz à épurer dans l'intérieur de l'ensemble constituant la manche ainsi que des moyens pour fournir une contre-pression d'une extrémité à l'autre de l'ensemble constituant la manche de façon à déloger les matières extraites du flux de gaz par filtration.
